(19) Europäisches Patentamt
European Patent Office
Office européen des brevets

(11) **EP 3 035 253 A1**

(12) **EUROPEAN PATENT APPLICATION**

(43) Date of publication:
**22.06.2016 Bulletin 2016/25**

(51) Int Cl.:
***G06Q 10/02*** *(2012.01)* ***G06Q 50/14*** *(2012.01)*

(21) Application number: **14004280.5**

(22) Date of filing: **18.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
• **Renaud, Nicolas**
**06370 Mouans-Sartoux (FR)**

• **Favre, Julien**
**06160 Antibes (FR)**
• **Rousselot, Xavier**
**06130 Grasse (FR)**

(74) Representative: **Samson & Partner Patentanwälte mbB**
**Widenmayerstraße 6**
**80538 München (DE)**

(54) **History-based probability forecasting**

(57) An apparatus, program product and method collect and maintain booking histories for customers within one or more computerized databases to incorporate the past behaviors of customers booked for service components when forecasting show probabilities for those service components. A show rate forecast operation, for example, may be used to determine a show probability for a service component based upon both a personal show probability for one or more customers booked on the service component and anonymous statistical show probability data relevant to the service component.

FIG. 1

## Description

### Field of the Invention

Embodiments of the invention relate generally to computers and computer software, and more specifically, to the use of computers and computer software to forecast probabilities based upon historical data.

### Background of the Invention

Inventory management of extremely perishable goods or resources of service industries that are, at one moment, lost if not sold, is a challenge in many service industries. For example, in the travel industry, service components such as hotels and airplane flights have limited resources (e.g., a fixed number of hotel rooms or a fixed number of seats), and as such, when a hotel room or a seat on an airplane flight goes unused, that unused resource represents a loss of revenue to a travel provider. Nonetheless, it is often the case that some resources that are booked or purchased by a customer will not be used, e.g., due to a cancelation by the customer or a change in the customer's itinerary. Business customers in particular may be subject to changing circumstances that may require changes in their travel plans. To account for the possibility that some booked resources will go unused, resources may be intentionally overbooked with the goal of optimizing resource usage; however, doing so also comes with the potential detriment to goodwill and increased costs associated with accommodating customers when all customers cannot be accommodated by the available resources.

Inventory management systems in some service industries, in an attempt to optimize resource usage as well as optimize revenue, employ revenue-driven and technically complex functionality referred to as revenue management or yield management. For example, some inventory management systems incorporate revenue management systems that incorporate forecasting and optimization functionality, with the former used to forecast or predict future demand, and the latter used to optimize availability (e.g., how much of a resource, e.g., a seat on a flight, will be offered at different price points). A component of future demand may also be based upon a "show probability" that attempts to predict the likelihood that booked or purchased resources will go unused, e.g., in the case of a flight, due to a customer not showing up at the time of departure or the customer canceling or changing a reservation prior to departure.

Show probability is conventionally based on statistical algorithms that generally take into account anonymous statistical data based on past resource usage. For example, show probability for a flight may be forecast based upon data such as the rates of no-shows and cancelations on past similar flights (e.g., same routes, same seasonality, etc.) and/or booking characteristics (e.g., by clustering booking attributes, anonymously). Conventional approaches, however, have been found to be limited in accuracy, so further improvements in forecasting show probability are still sought.

### Summary of the Invention

The invention addresses these and other problems associated with the prior art by providing an apparatus, program product and method that collect and maintain booking histories for customers within one or more computerized databases to incorporate the past behaviors of customers booked for service components when forecasting show probabilities for those service components.

Therefore, according to one aspect of the invention, show probability may be forecasted for a service component by maintaining, in a computerized database, data representing a booking history for a first customer booked for the service component; accessing, with at least one processor, the data representing the booking history in the database; determining, with at least one processor, a personal show probability for the first customer based upon the accessed data representing the booking history; accessing, with at least one processor, anonymous statistical show probability data relevant to the service component; and determining, with at least one processor, a show probability for the service component based on the determined personal show probability for the first customer and the accessed anonymous statistical show probability data.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

### Brief Description of the Drawings

FIGURE 1 is a block diagram of components in a data processing system consistent with embodiments of the invention.

FIGURE 2 is a block diagram of the revenue management system referenced in Fig. 1.

FIGURE 3 is a block diagram of example components configured to perform a show rate forecast operation consistent with the invention.

FIGURE 4 is a flowchart illustrating an example sequence of operations that may be performed to build customer booking histories consistent with the invention.

FIGURE 5 is a flowchart illustrating an example sequence of operations that may be performed to perform a show rate forecast operation consistent with the invention.

FIGURE 6 is a block diagram of an example decision tree used to perform a show rate forecast operation consistent with the invention.

## Detailed Description

Embodiments consistent with the invention collect and maintain booking histories for customers within one or more computerized databases to incorporate the past behaviors of customers booked for service components when forecasting show probabilities for those service components. In some embodiments, for example, a show rate forecast operation may be used to determine a show probability for a service component based upon both a personal show probability for one or more customers booked on the service component and anonymous statistical show probability data relevant to the service component.

Personal show probability, in this regard, is based at least in part upon a booking history for a customer that is collected and managed in a computerized database. The booking history may incorporate data regarding past bookings by a customer as well as data indicating whether those past bookings were used or could be used. It will be appreciated that past bookings may relate not only to bookings made for resources that have already been used or lost (e.g., seats on flights that have already been flown), but also to bookings made for resources that have yet to have been used (e.g., seats on upcoming flights that have not yet flown). In some embodiments discussed hereinafter, for example, past but still pending bookings for future flights may be analyzed to detect conflicts that would preclude a booked resource for a customer from being used, e.g., where a customer books seats on multiple flights with the intent of only using one. Such instances may occur, for example, when a business traveler needing to visit multiple facilities books multiple flights to different destinations when it is unknown where that business travel needs to go next, or when a business traveler books multiple flights at different times when it is unknown how long the business traveler needs to stay at a particular location. In some embodiments, bookings resources that have already been used (e.g., flights that have already flown) may be considered redeemed or non-redeemed based upon whether a customer used the booking (e.g., whether the customer actually traveled on a booked flight). Thus, for example, in the case of bookings for flights, a non-redeemed booking may include a canceled booking where a customer formally cancels a booking or changes a booking to another flight, as well as a no-show booking where the customer does not cancel or change the booking but does not ultimately board the flight.

Anonymous statistical show probability data relevant to a service component, in this regard, may refer to data that is generally indicative of show rates for service components, which may be based upon a service component, based upon bookings, or both. Some anonymous statistical show probability data, for example, may be based upon a service component, e.g., based upon observed show rates of past similar flights (same seasonality, same route, etc.), such that all customers booked on a given service component may be allocated the same show probability based upon this anonymous statistical show probability data. Some anonymous statistical show probability data, as another example, may be based upon bookings, e.g., based upon past similar bookings (using clustering algorithms on Passenger Name Record (PNR) attributes), such that each customer booked on a given service component may have a different show probability based upon this anonymous statistical show probability data based upon the attributes of that customer's booking. In both cases, however, the show probability data in question is both statistical and anonymous in nature, because it is generally based upon statistical analysis of multiple service components and/or bookings sharing similar characteristics, and because due to the statistical nature of the analysis, the data is anonymous insofar as it is not tied to any particular customer. As such, anonymous statistical show probability data related to bookings differs from the data utilized herein to determine personal show probabilities because the former is not related to the specific activities of a particular customer.

The hereinafter-described embodiments will focus on an airline-oriented application in which a service component is an airplane flight, a travel vehicle is a plane, and the seats on that flight represent limited resources capable of being booked by customers, and potentially subject to no-shows, cancelations, or other itinerary changes that may result in a booked seat going unused by a customer at the time of departure of the flight. As such, a show rate forecast operation in the hereinafter-described embodiments attempts to predict the rate or probability of the bookable seats on the flight (or in some embodiments, a portion or subset of the bookable seats, e.g., seats allocated to a particular class, cabin, or other manner of classifying different seats on a given flight) that will ultimately be booked and occupied when the flight departs.

It will be appreciated, however, that the principles of the invention may be applied to other types of service components, including other travel-related service components such as hotels, rental cars, cruises, trains, buses, etc.), as well as non-travel-related service components (e.g., theaters, attractions, ticketed events, etc.) subject to limited resources that potentially may go unused at a particular point in time. Therefore, the invention is not limited to the particular airline-oriented application disclosed herein.

As will become more apparent below, in some embodiments consistent with the invention, show probability may be forecasted for a service component by maintaining, in a computerized database, data representing a booking history for a first customer booked for the service component. The data representing the booking history in the database may be accessed, and a personal show probability may be determined for the first customer based upon the accessed data representing the booking history. Anonymous statistical show probability data relevant to the service component may also be determined, such that a show probability for the service component may be determined based on the determined personal show probability for the first customer and the accessed anonymous statistical show probability data.

In some embodiments, the service component is for travel on a travel vehicle between an origin location and a destination location, and in some embodiments, the service component comprises a flight between an origin airport and a destination airport. In some embodiments, determining the personal show probability for the first customer based upon the accessed data representing the booking history includes identifying at least one non-redeemed booking for the first customer, and determining the personal show probability for the first customer based at least in part on the identified at least one non-redeemed booking for the first customer. In such embodiments, the non-redeemed booking for the first customer may comprise a canceled booking or a no-show booking for a past service component, or the non-redeemed booking for the first customer may comprise a conflicting booking that conflicts with another booking for the first customer.

In some embodiments, determining the personal show probability for the first customer based at least in part upon the identified at least one non-redeemed booking includes comparing pairs of bookings in the booking history to identify conflicting bookings that are incapable of both being redeemed. In such embodiments, comparing the pairs of bookings in the booking history may include comparing first and second bookings, the first booking for travel between a first origin location and a first destination location, the second booking for travel between a second origin location and a second destination location, and comparing the first and second bookings may include determining whether an arrival time of the first booking at the first destination location is compatible with a departure time of the second booking from the second origin location. In addition, in some embodiments, comparing the pairs of bookings in the booking history may include comparing first and second bookings, the first booking associated with a first time period and a first location, the second booking associated with a second time period and a second location, and comparing the first and second bookings may include determining whether the first time period and the first location are compatible with the second time period and second location of the second booking such that the first and second bookings are both capable of being redeemed.

In some embodiments, a length of time to travel between the first and second locations may be determined, where determining whether the first time period and the first location are compatible with the second time period and second location of the second booking is based at least in part on the determined length of time. In addition, in some embodiments, determining the personal show probability for the first customer based at least in part upon the identified at least one non-redeemed booking further includes removing from further consideration at least one conflicting booking that is also a canceled or no-show booking. In addition, in some embodiments, determining the personal show probability for the first customer based at least in part upon the identified at least one non-redeemed booking further includes determining a historical show probability for the first customer based upon a comparison of redeemed and non-redeemed past bookings in the booking history for the first customer.

In some embodiments, determining the personal show probability for the first customer based at least in part upon the identified at least one non-redeemed booking further includes modifying the historical show probability for the first customer in response to detecting a conflict between a current booking for the first customer that is associated with the service component and another booking in the booking history, and in some embodiments, the other booking is a redeemed booking, and modifying the historical show probability for the first customer includes setting the personal show probability for the first customer to indicate that the first customer will not redeem the service component. In some embodiments, the other booking is a future booking, and modifying the historical show probability for the first customer includes dividing the historical show probability by a sum of the current booking and a number of other bookings in the booking history that conflict with the current booking.

In some embodiments, determining the personal show probability for the first customer further includes determining a confidence factor for the personal show probability, and determining the show probability for the service component includes determining a statistical show probability for the first customer based at least in part upon the accessed anonymous statistical show probability data, and combining the statistical show probability for the first customer with the personal show probability for the first customer using the confidence factor. In some embodiments, the accessed anonymous statistical show probability data includes historical show rates for similar service components, and such embodiments further include determining the statistical show probability for the first customer based at least in part upon the historical show rates for similar service components. In some embodiments, the accessed anonymous statistical show probability data includes historical show rates for similar bookings, and such embodiments further include determining the statistical show probability for the first customer based at least in part upon the historical show rates for similar bookings.

In some embodiments, the computerized database stores identification data for each of a plurality of customers and booking history data representing booking histories for the plurality of customers, and such embodiments further include updating the computerized database in response to receipt of a new booking by applying a matching algorithm to the new booking to identify a customer among the plurality of customers with which the new booking is associated, and associating the new booking with the identified customer in response to applying the matching algorithm.

In some embodiments, applying the matching algorithm further comprises creating a new customer in the computerized database in response to a failure to identify a customer with which the new booking is associated, and merging multiple customers in the computerized database in response to identifying that the new booking is associated with the multiple customers. In some embodiments, applying the matching algorithm to the new booking includes comparing booking data associated with the new booking with the identification data for each of the plurality of customers, where the booking data includes two or more of a customer name, a customer phone number, a customer email address or a customer frequent flier number.

In some embodiments, the service component may be overbooked using the determined show probability, and in some embodiments, check-in of the service component may be managed using the determined show probability. In some embodiments, fuel or food allocation for the service component may be managed using the determined show probability.

Some embodiments may also include an apparatus including at least one processor and program code configured upon execution by the at least one processor to forecast show probability for a service component in any of the manners discussed herein. Some embodiments may also include a program product including a non-transitory computer readable medium and program code stored on the computer readable medium and configured upon execution by at least one processor to forecast show probability for a service component in any of the manners discussed herein.

Other variations and modifications will be apparent to one of ordinary skill in the art.

Hardware and Software Environment

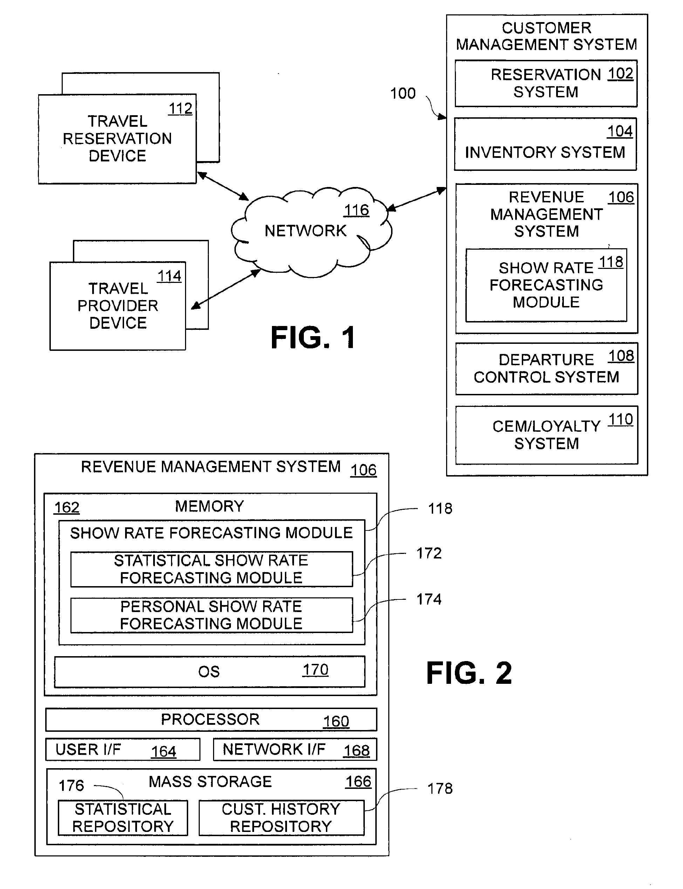

Turning now to the drawings, wherein like numbers denote like parts throughout the several views, Fig. 1 illustrates a data processing system including one or more devices and/or systems that may be used to implement the various features of the invention. A customer management system (CMS) 100 may include a number of systems including a reservation system 102, an inventory system 104, a revenue management system 106, a departure control system 108 and a customer experience management(CEM)/loyalty system 110, and may be interfaced to one or more travel reservation devices 112 and/or travel provider devices 114 (as well as between the various systems 102-110) via one or more communication networks 116, where the communication network may comprise the Internet, a local area network (LAN), a wide area network (WAN), a cellular voice/data network, one or more high speed bus connections, and/or other such types of communication networks and combinations thereof. Each travel reservation device 112 may be used, for example, to enable a reservation agent (e.g., travel agency, traveler, or other such travel reservation service) to initialize a reservation session with the reservation system 102 to communicate a booking request and/or other such relevant data to the reservation system 102. The travel reservation device 104 may be a personal computing device, desktop computer, laptop computer, tablet computer, thin client terminal, smart phone and/or other such computing device. Likewise, each travel provider device 114 may be used, for example, to enable travel provider personnel to access the various systems in CEM system 100, e.g., gate agents, ticketing agents, management, etc.

Consistent with embodiments of the invention, a reservation agent may interface with the reservation system 102 using the travel reservation device 104 in a reservation session to provide data for a booking request. In turn, the reservation system interfaces with inventory system 104, which in turn interfaces with revenue management system 106 to determine availability for the booking request. The availability may be determined in part using a show rate or show probability forecast that may be performed by a show rate forecasting module 118 in revenue management system 106. Moreover, while the reservation system 102, inventory system 104, revenue management system 106, departure control system 108 and CEM/loyalty system 110 are described herein as separate entities, the invention is not so limited.

In some embodiments, various hardware, software components, and/or sequences of operations described with respect to systems 102-110 may be implemented combined into other systems, omitted from some systems, are split into multiple systems. Furthermore, as will be appreciated, in some embodiments some of systems 102-110 may be components of a Global Distribution System (GDS).

Turning now to Fig. 2, this figure provides a block diagram that illustrates the components of the one or more servers of the revenue management system 106 that are related to implementing the herein-described show probability forecasting functionality. The revenue management system 106 includes at least one processor 160 including at least one hardware-based microprocessor and a memory 162 coupled to the at least one processor 160. The memory 162 may represent the random access memory (RAM) devices comprising the main storage of revenue management system 106, as well as any supplemental levels of memory, e.g., cache memories, non-volatile or backup memories (e.g., programmable or flash memories), read-only memories, etc. In addition, memory 162 may be considered to include memory storage physically located elsewhere in the revenue management system 106, e.g., any cache memory in a microprocessor, as well as any storage capacity used as a virtual memory, e.g., as stored on a mass storage device 166 or on another computer coupled to the revenue management system 106.

For interface with a user or operator, the revenue management system 106 may include a user interface 164 incorporating one or more user input/output devices, e.g., a keyboard, a pointing device, a display, a printer, etc. Otherwise, input may be received via another computer or terminal (e.g., any of systems 102, 104, 108 or 110) over a network interface 168 coupled to the communication network 116. The revenue management system 106 also may be in communication with one or more mass storage devices 166, which may be, for example, internal hard disk storage devices, external hard disk storage devices, external databases, storage area network devices, etc.

The revenue management system 106 typically operates under the control of an operating system 170 and executes or otherwise relies upon various computer software applications, components, programs, objects, modules, engines, data structures, etc., including for example, show rate forecasting module 118, which may include a statistical show rate forecasting module 172 and a personal show rate forecasting module 174, which may respectively access statistical and customer history repositories 176, 178 shown disposed in mass storage device 166.

Various additional applications, components, programs, objects, modules, etc. may also execute on one or more processors in another computer coupled to the revenue management system 106 via the communication network 116, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

HISTORY-BASED PROBABILITY FORECASTING

Embodiments consistent with the invention collect and maintain booking histories for customers within one or more computerized databases to incorporate the past behaviors of customers booked for service components such as flights when forecasting show probabilities for those service components. This is in contrast to conventional revenue management systems that generally rely on statistical methods on anonymous statistical data associated with past similar flights and/or booking characteristics to compute show probabilities for service components such as flights.

As noted above, for example, in some embodiments a personal show probability may be calculated for one or more customers booked with a service component such as a flight to refine an overall show probability forecast for the service component. Inaccurate show probability forecasts can lead, in the case of underestimated show probability forecasts, to excessively aggressive overbooking that causes some customers to be refused at boarding time, which can lead to loss of goodwill with denied customers and increased costs in terms of compensation and/or accommodations for such customers. Inaccurate show probability forecasts can also lead, in the case of overestimated show probability forecasts, to empty seats on a flight, causing a loss of revenue for an airline. Improving show probability forecasts may therefore improve airline revenues.

Incorporation of a personal show probability into a show probability forecast, however, additionally presents technical challenges requiring technical solutions to resolve. Conventional approaches that resort solely to statistical analysis of past similar flights and/or bookings, for example, are incapable of analyzing the specific histories of individual customers, as there is generally no manner of extracting individual booking histories for specific customers. Furthermore, tracking the show histories of specific customers across multiple reservation records is a non-trivial technical exercise, generally incorporating the use of long-term storage and management of customer activities, as well as the ability to recognize a customer from one record to the next based on various and sometimes incomplete data (including but not limited to: demographic information, frequent flyer identification, booking office or agent, credit card information, etc.). In addition, a booking history may include bookings that conflict with other bookings such that all of the bookings may not be used, so detection of such conflicting bookings may require additional analysis of times and other characteristics of flights to detect bookings that cannot be simultaneously used. Also, for some customers, sufficient history data may be available to accurately determine a personal show probability for those customers, and as such, a manner of combining conventional show probability forecasting may be needed in some embodiments.

In general, embodiments consistent with the invention may be used to transform data reflective of a particular customer's booking history into a show probability for a service component upon which that customer is booked, thereby further optimizing revenue-driven inventory management for an airline or other supplier of limited service resources.

In one example embodiment discussed in greater detail below, show probability forecasting may incorporate in part the storage of bookings associated with each customer along with any relevant operational information associated to these bookings, such as effective status. The bookings may include bookings associated with past flights but also bookings associated with future flights. An identification process may be used to identify a customer across multiple bookings, e.g., based on any information available in the booking record, e.g., demographic information, departure location, method of payment, loyalty identifier, etc. In addition, in this embodiment, the show rate of customers on a given flight may be determined by taking the individual histories of customers or a flight into account, and the computed show rates of those customers may then be integrated into a legacy or conventional show rate forecasting system to improve the accuracy of the show rate forecast. The show rate forecast may then be used, for example, in optimizing an overbooking strategy, in allocating food or fuel for the flight, in optimizing customer management at check-in, or in other manners in which a prediction of the utilization of the seats on a flight at time of departure may be considered to be of use.

In some embodiments, the identification of customers from booking data may be performed when filing bookings and/or when reading the bookings. In addition, in some embodiments, the bias imparted on show probability forecasts by a forecaster based upon personal show history can take different forms, including, for example, computing the show rate of a customer over previous bookings and/or detecting conflicting bookings with a current booking for a given customer, both of which will be described in greater detail below.

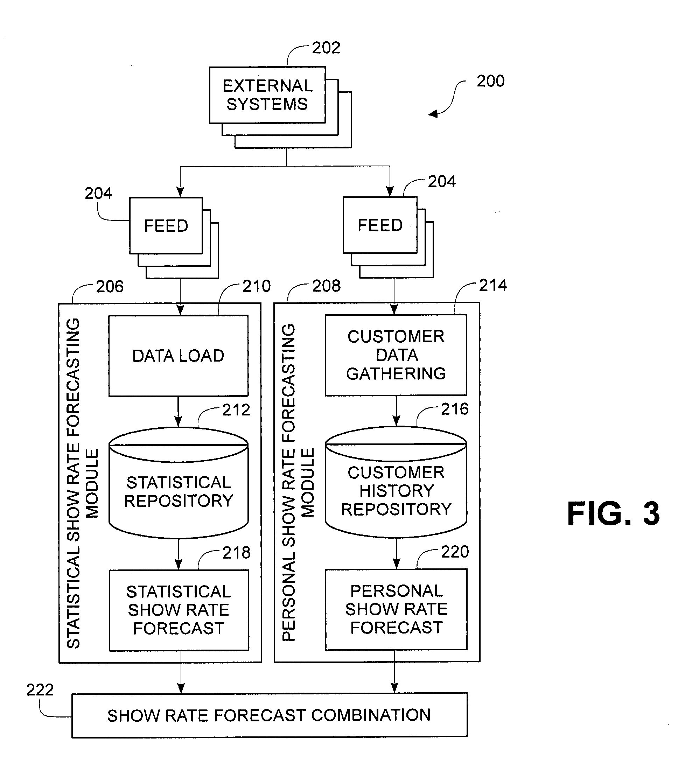

Now turning to Fig. 3, in one embodiment of the invention, show probability forecasting may be implemented as illustrated by data processing system 200. In this embodiment, two aspects of the overall forecasting infrastructure are illustrated. A first aspect, representing a data gathering aspect of the infrastructure, incorporates building of customer booking histories. A second aspect, representing a forecasting aspect of the infrastructure, incorporates the performance of show rate forecast operations consistent with the invention.

For example, for the data gathering aspect of the infrastructure, one or more external systems 202 may output various data feeds 204 that are respectively processed by statistical show rate forecasting and personal show rate forecasting modules 206, 208.

In statistical show rate forecasting module 206, a data load module 210 analyzes data feeds to populate a statistical repository 212 with anonymous statistical show probability data such as flight-related show probability data categorized by flight characteristics such as origins, destinations, routes, dates, times, carriers, seasons, reservation cabin, reservation class, etc., as well as booking-related show probability data categorized by booking characteristics such as demographic data, characteristics of the ticket (e.g., exchangeable, refundable, etc.), status of the ticket (e.g., ticketed/not ticketed), deposit completed, travel purpose (e.g., (business/leisure), other PNR attributes, etc. Other types of anonymous statistical show probability data used in conventional show probability forecasting may also be used, as will be appreciated by one of ordinary skill in the art having the benefit of the instant disclosure.

In personal show rate forecasting module 208, a customer data gathering module 214 analyzes data fees to populate a customer history repository or database 216 to build booking histories for a plurality of customers, in a manner discussed in greater detail below.

For the forecasting aspect of the infrastructure, a statistical show rate forecast module 218 in statistical show rate forecasting module 206 determines statistical show probabilities based upon data in repository 212, while a personal show rate forecast module 220 determines personal show probabilities based upon data in repository 216, while a show rate forecast combination module 222 combines the show probabilities output by modules 218 and 220 to generate a combined show probability for a flight or other service component.

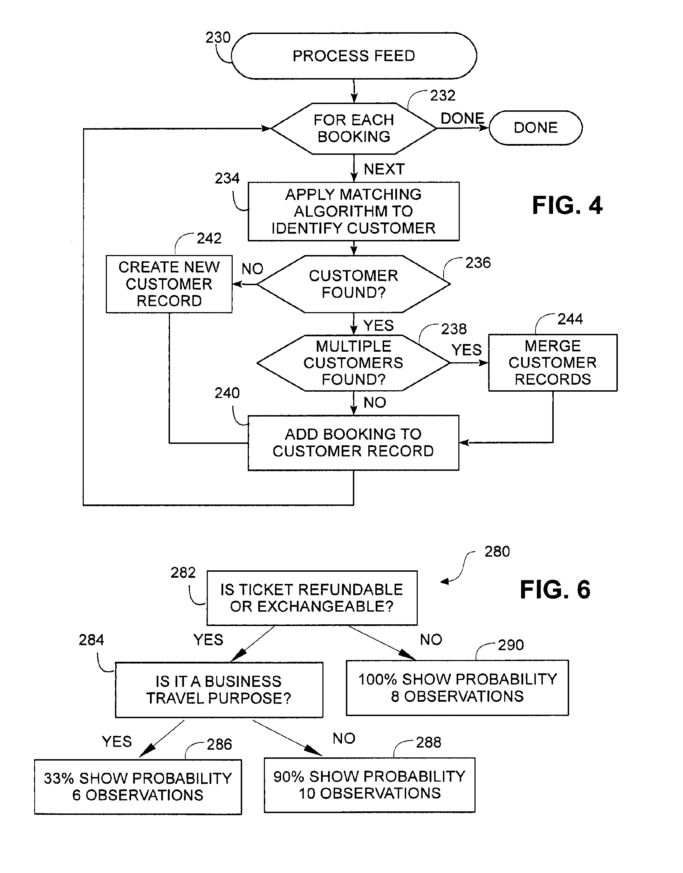

Fig. 4 next illustrates a process feed routine 230 that may be used to build customer booking histories in customer data gathering module 214 of Fig. 3. Routine 230 may be called, for example, in response to receipt of new feed data incorporating one or more bookings. Routine 320 begins in block 232 by initiating a FOR loop to process each booking in an incoming feed. For each such booking, block 234 applies a matching algorithm to identify the customer associated with the feed in the customer history repository, e.g., based upon data in a booking such as customer name, customer phone number, customer email address, customer frequent flier number, etc. Block 236 then determines whether an existing customer was found in the customer history repository, and if so, passes control to block 238 to determine whether multiple matching customer records were found in the repository. If not, control passes to block 240 to add the booking to a record for the identified customer in the customer history repository, and control passes to block 232 to process each remaining booking, whereby upon all bookings being processed, routine 230 is complete. Returning to block 236, if no customer is found, a new customer record is created for the new customer in block 242, and control is passed to block 240 to add the booking to the new customer record. Returning to block 238, if multiple customer records are found, control passes to block 244 to merge the multiple customer records together into the same customer record, associating all existing bookings for the existing customer records with the same customer record, and merging the customer identification data maintained in the customer record. Control then passes to block 240 to add the current booking to the newly-merged customer record.

In one embodiment, module 214 (Fig. 3) may fetch or may receive notifications from a Passenger Service System (PSS) feed. For example, a PSS may provide notifications to module 214, either online or offline, representing any flight booking creations, updates or deletions. Module 214 may also fetch or receive notifications from a Departure Control System (DCS) to be notified of which customers were actually boarded on which flights, such that the customer history repository may update customer records to indicate which bookings were or were not ultimately used. Module 214 may also receive or fetch relevant ticketing data and consolidate that information with the bookings. Such information may be combined with relevant customer information (e.g., taken from a Passenger Name Record

(PNR) associated with each flight booking), which may be used to identify the customer across several PNRs.

Module 214 also is able to determine, from the above information or from additional feeds or external systems, information about the completion status of bookings, i.e., whether a flight was actually flown in the end, or not, as well as whether a customer checked-in. As such, in some embodiments it may be possible to distinguish between several cases, including that a flight was cancelled for technical reasons, a booking was cancelled by a customer in advance of departure, a customer did not show up at the airport without prior notification, or a customer showed up at the airport but failed to board the plane.

Module 214 may maintain and store any other relevant criteria concerning a customer and a flight booking, in order to optimize both the identification process and the determination of personal show probability of the customer on future flights. In addition, as will be discussed in greater detail below, the feeds provided to module 214 may also include bookings related to future flights, conflicting bookings may be detected for customers, providing a supplemental or alternative manner of forecasting the show probability of a customer.

Returning to block 234 of Fig. 4, various matching algorithms may be used to identify a customer from a booking. In particular, in various embodiments, bookings or reservation records may contain various types of data relating to a customer, including but not restricted to: first name, last name, frequent flyer information, full or partial credit card number, passport number, contact information such as phone, email and/or mailing address, etc. Moreover, different bookings may include different subsets of this data, i.e., some bookings may be incomplete such that not every booking includes the same information. In some embodiments, a combination of these types of data may be analyzed by the matching algorithm, e.g., based upon customers already known from past data, and data available in the incoming feed.

In addition, the matching algorithm may take into account any inaccuracies in feed data. For instance, it is common for transliterated names to have several possible spellings in the Latin alphabet, and as such, it may be desirable in some embodiments to use a double metaphone algorithm to address transliteration issues. In addition, the matching algorithm may, in some embodiments, store and index phone numbers in inverted order, in order to minimize the weight of optional phone extensions, area codes, etc.

In addition, in some embodiments the matching algorithm may store and index several instances of each type of data, given, for example, that a customer may use several phone numbers, several email addresses, several passport numbers, or several credit cards.

Since it may be difficult to positively identify a customer on any subset of the data, the matching algorithm may in some embodiments generate a confidence factor for each possible match, and compare the confidence factor with a threshold that is set at a level that provides sufficient confidence that two identified customers (e.g., a customer identified by a customer record and a customer identified from feed data) are the same individual. Three different cases can occur, e.g., as represented by blocks 236-244 of Fig 4:

No match reaches the threshold: In this case, a new customer record is created in the customer history repository, containing the incoming data.

Exactly one match reaches the threshold: In this case, the incoming data is appended to the existing customer record, enriching the history of the customer.

More than one match reaches the threshold: In this case, all the corresponding matching customers are merged into a single entity, to which the incoming data is appended.

In one embodiment, a matching algorithm may employ logic that searches the customer history repository for a customer record with a similar first name and last name, and any other matching parameter such as any of the parameters discussed above, to the incoming data from a booking. In one embodiment, for example, a matching algorithm base a match on finding data matching two or more of a customer name, a customer phone number, a customer email address or a customer frequent flier number. Such an algorithm may be sufficient, for example, to identify Western customers (in North America and Western Europe) in some embodiments. For example, consider the existing known customers shown in Table I below:

**Table I: Example Known Customers**

| ID | First name | Laste name | Phone number | Email address |
|----|------------|------------|--------------|---------------|
| 1 | John | Smith | 564-4421-889 | jsmith@foo.com john.smith@bar.com |
| 2 | Paul | Doe | | Paul.doe@foo.com |
| 3 | Suzan | Smith | 564-4421-889 | ssmith@foo.com |
| 4 | Mary | Jones | 845-5846-127 845-9862-357 | mjones@foo.com |
| 5 | John | Smith | 564-5842-845 | |

Example A: Incoming data is for a Paul Doe, phone number: 684-5874-367

In this example, the aforementioned matching algorithm may determine that no known customer matches sufficiently (since last name and first name are not sufficient without a match of at least one additional parameter). As such, the matching algorithm creates a new customer record in the customer history repository, populated with the incoming data.

Example B: Incoming data is for a Mary Jones, phone number 845-9862-357, email mary.jones@bar.com

In this example, customer record #4 matches by first name, last name and phone number, therefore it is considered as a possible match. Since it is the only match, the incoming data is appended to customer record #4, thereby adding the new email address to the customer record.

Example C: Incoming data is for a John Smith, phone number 564-5842-845, email jsmith@foo.com

In this example, customer record #1 is a possible match, because it matches by first name, last name and email address. In addition, customer record #5 is another possible match, because it matches by first name, last name and phone number. Since there are multiple matches, customer records #1 and #5 may be merged into a single customer record, with the incoming data appended to the merged new customer record.

For other markets, e.g., Asia or the Middle-East, a matching algorithm may also need to account for transliterations and the relatively high frequency of some names. In these cases, it may be desirable to use decision trees, Bayesian models or other entity resolution techniques to compute possible matches and confidence factors to enable a determination to be made as to whether incoming data matches one or more existing customer records. Decision trees and Bayesian models, in particular, may be desirable in some embodiments, as such techniques enable dynamic weights to be assigned to different criteria. Such weights may be computed dynamically using several methods, including but not limited to biasing the weight depending on:

- the level of similarity of the criterion instance, such as the number of matching digits on the right side of a phone number, of the phonetic proximity of names;

- the frequency of a given value among all known customers (e.g., frequent names or contact information of a travel agency may be assigned a lower weight than less frequent values);

- the cardinality of the criterion, e.g., if several phone numbers are available in the incoming data and/or in a customer record, finding one that matches is less remarkable than finding a match where fewer phone numbers are available in the incoming data and/or in the customer record.

It will be appreciated that a wide variety of matching algorithms may be used to determine matches between bookings or other incoming data from a feed and one or more customer records in a customer history database. As such, the invention is not limited to the particular embodiments discussed herein.

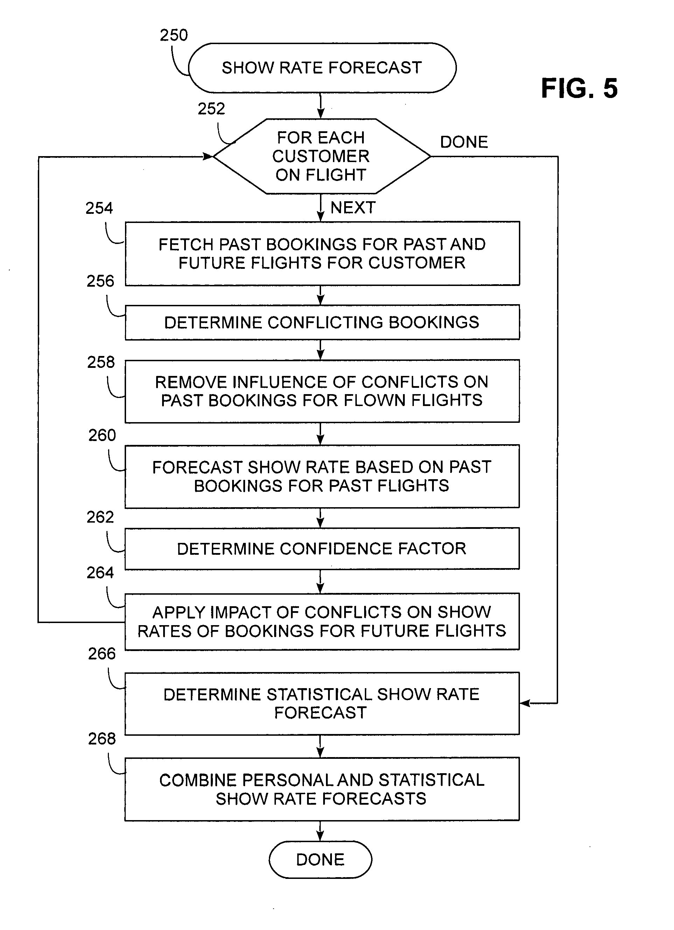

Now turning to Fig. 5, this figure illustrates an example show rate forecast routine 250 configured to perform a show rate forecast operation for a flight or other service component consistent with the invention. From the perspective of data processing system 200 of Fig. 3, for example, blocks 252-264 may be performed by module 220, block 266 may be performed by module 218, and block 268 may be performed by module 222. Routine 250 begins in block 252 by initiating a FOR loop to process each customer booked on the flight.

For each such customer, block 254 fetches past bookings for both past and future flights for that customer from the customer history repository (if any). In one embodiment, for example, an identification process similar to that described above for routine 230 may be performed based upon identifying data for the customer associated with the flight (e.g., in a PNR that is linked to the flight) to identify one or more customer records in the customer history repository to retrieve the past bookings associated with those customer records. Each past booking may include, for example, information about the travel (e.g., departure (origin) and/or arrival (destination) airport, departure and/or arrival date and/or time in UTC, etc.), a status of the booking (e.g., active, flown, cancelled, no-show, etc.), if cancelled, a cancellation date, a ticket condition (e.g., refundable, exchangeable, etc.), a status of the ticket prior to cancellation (e.g., has it been ticketed or not), a booking class of the booking and/or other booking details.

In one embodiment, the bookings may be ordered by departure/arrival date and time. Table II, as an example, shows an ordered list of bookings for an example customer considering a flight from Nice to New York on 03/09/2014 departing at 20:00:

**Table II: Customer A Booking History**

| Travel ID | Origin airport | Origin date/time | Destination airport | Destination date/time | Status | Other Info |
|---|---|---|---|---|---|---|
| 1 | Nice (NCE) | 01/05/2014 10:00 | New York (JFK) | 01/05/2014 18:00 | Flown | ... |
| 2 | Nice (NCE) | 01/05/2014 20:00 | New York (JFK) | 01/05/2014 04:00 | No-show | ... |
| 3 | New York (JFK) | 16/07/2014 15:00 | Atlanta (ATL) | 16/07/2014 17:00 | Cancelled (5 days) | ... |

(continued)

| Travel ID | Origin airport | Origin date/time | Destination airport | Destination date/ time | Status | Other Info |
|---|---|---|---|---|---|---|
| 4 | Sydney (SYD) | 20/07/2014 08:00 | Perth (PER) | 20/07/2014 13:00 | Cancelled (20 days) | ... |
| 5 | Nice (NCE) | 05/08/2014 10:00 | New York (JFK) | 05/08/2014 18:00 | Flown | ... |
| 6 | New York (JFK) | 07/08/2014 15:00 | Atlanta (ATL) | 06/08/2014 17:00 | Flown | ... |
| 7 | Atlanta (ATL) | 13/09/2014 15:00 | Nice (NCE) | 13/09/2014 22:00 | Flown | ... |
| 8 | Sydney (SYD) | 14/09/2014 08:00 | Perth (PER) | 07/09/2014 13:00 | No-show | ... |
| 9 | Nice (NCE) | 03/09/2014 10:00 | New York (JFK) | 03/09/2014 18:00 | Flown | ... |
| 10 | Nice (NCE) | 03/09/2014 20:00 | New York (JFK) | 04/09/2014 04:00 | Active | ... |
| 11 | New York (JFK) | 06/09/2014 15:00 | Atlanta (ATL) | 06/09/2014 17:00 | Active | ... |
| 12 | Sydney (SYD) | 09/09/2014 08:00 | Perth (PER) | 09/09/2014 13:00 | Active | ... |
| 13 | Perth (PER) | 10/09/2014 10:00 | Sydney (SYD) | 10/09/2014 15:00 | Active | ... |
| 14 | Atlanta (ATL) | 13/09/2014 07:00 | Nice (NCE) | 13/09/2014 16:00 | Active | ... |
| 15 | Nice (NCE) | 18/09/2014 10:00 | New York (JFK) | 18/09/2014 18:00 | Active | ... |
| 16 | New York (JFK) | 18/09/2014 18:10 | Atlanta (ATL) | 18/09/2014 21:00 | Active | ... |

Next, block 254 passes control to block 256 to determine conflicting bookings, i.e., bookings that are incompatible with each other. In one embodiment, for example, block 256 may employ a conflict detection algorithm that, for each pair of bookings in a booking history:

(1) orders the two bookings by start date and time first, and in case of equality of start date/time, by end date and time (for the purposes of this example, the first booking in the order may be considered the "previous booking" and the second may be considered the "next booking");

(2) computes the distance between the arrival airport of the "previous booking" and the departure airport of the "next booking";

(3) using the computed distance, computes a minimum time required for the customer to depart on a new flight from the departure airport of the "next booking" provided the customer has arrived at the arrival airport of the "previous booking." For example, in one embodiment, the minimum time may be computed by the following formula:

$$Minimum\_Time = Distance * Speed + Minimum\_Connection\_Time,$$

where Speed is the speed of travel (e.g., set to 1000 km/h) and Minimum_Connection_Time is the minimum connection time between two consecutive flights (e.g., 1 hour); and

(4) if the arrival date and time of the "previous booking" + Minimum_Time is later than the departure date and time of the "next booking", then the two bookings may be determined to be in conflict, and it is assumed that the customer does not have the ability to fly on both of the two bookings.

As one example, consider flights 1 and 2 from Table II above. Using the aforementioned algorithm, flight 1 is ordered before flight 2, and based upon the distance between Nice and New York (about 6400 km), the minimum time, assuming a speed of 1000 km/h and a minimum connection time of 1 hour, would be computed as 7.4 hours to return from New York to Nice after flight 1 lands in New York. Thus, for flight 2, since the arrival time in New York for flight 1 is 18:00 on 01/05/2014, the earliest the customer could take another flight from Nice would be approximately 01:30 on 02/05/2014. Therefore, because flight 2 has a departure of 20:00 on 01/05/2014, flights 1 and 2 are considered as in conflict.

As another example, consider flights 1 and 3 from Table II above. Using the aforementioned algorithm, flight 1 is ordered before flight 3, the distance between the arrival and departure airports is 0 km (same airport), and the minimum time is computed as 1 hour based on a minimum connection time of 1 hour. Since the arrival time in New York is 18:00 on 01/05/2014, the customer would be able to take another flight departing from New York any time after 19:00 on 01/05/2014. Flight 3, having a departure of 15:00 on 16/7/2014, is therefore not considered as in conflict with flight 1.

As yet another example, consider flights 15 and 16 from Table II above. Using the aforementioned algorithm, flight 15 is ordered before flight 16, the distance between the arrival and departure airports is 0 km (same airport), and the minimum time is computed as 1 hour based on a minimum connection time of 1 hour. Since the arrival time in New York is 18:00 on 18/09/2014, the customer would be able to take another flight departing from New York any time after 19:00 on 18/09/2014. Flight 16, having a departure of 18:10 on 18/09/2014, is therefore considered as in conflict with flight 15.

For each of the flights in Table II, flights 1 and 2 may be considered in conflict with one another, flights 7 and 8 may be considered in conflict with one another, flights 9 and 10 may be considered in conflict with one another, and flights 15 and 16 may be considered in conflict with one another, with the remaining flights having no identified conflicts.

In general, therefore, in some embodiments, pairs of bookings may be considered to be incompatible or in conflict when those bookings are incapable of both being redeemed or used. For example, pairs of bookings may be in conflict when an arrival time of a first booking at a destination location is incompatible with a departure time of a second booking insofar as the customer would be unable to depart from the destination location if the first booking is redeemed. Likewise, pairs of bookings may be in conflict when a time period and location of a first booking are incompatible with a time period and location of a second booking such that the first and second bookings are incapable of both being redeemed.

Returning to Fig. 5, after determining conflicts in block 256, the influence of conflicts may be removed from past bookings for flown flights in block 258. Doing so may preclude conflicts from being taken into account twice in the determination of a personal show probability. Therefore, for each booking associated with a flown flight, it may be desirable to remove any other bookings in conflict with that booking, and for which there was a no-show or cancellation. As such, for the flights in Table II, flight 2 may be removed as being in conflict with flown flight 1 and having a "no-show" status, and flight 8 may be removed as being in conflict with flown flight 7 and having a "no-show" status. The resulting list of flights is shown below in Table III:

**Table III: Customer A Booking History After Removal of Conflicts**

| Travel ID | Origin airport | Origin date/time | Destination airport | Destination date/time | Status | Conflict with |
|---|---|---|---|---|---|---|
| 1 | Nice (NCE) | 01/05/2014 10:00 | New York (JFK) | 01/05/2014 18:00 | Flown | None |
| 3 | New York (JFK) | 16/07/2014 15:00 | Atlanta (ATL) | 16/07/2014 17:00 | Canceled (5 days) | None |
| 4 | Sydney (SYD) | 20/07/2014 08:00 | Perth (PER) | 20/07/2014 13:00 | Canceled (20 days) | None |
| 5 | Nice (NCE) | 05/08/2014 10:00 | New York (JFK) | 05/08/2014 18:00 | Flown | None |
| 6 | New York (JFK) | 07/08/2014 15:00 | Atlanta (ATL) | 06/08/2014 17:00 | Flown | None |

(continued)

| Travel ID | Origin airport | Origin date/time | Destination airport | Destination date/time | Status | Conflict with |
|---|---|---|---|---|---|---|
| 7 | Atlanta (ATL) | 13/09/2014 15:00 | Nice (NCE) | 13/09/2014 22:00 | Flown | None |
| 9 | Nice (NCE) | 03/09/2014 10:00 | New York (JFK) | 03/09/2014 18:00 | Flown | 10 |
| 10 | Nice (NCE) | 03/09/2014 20:00 | New York (JFK) | 04/09/2014 04:00 | Active | 9 |
| 11 | New York (JFK) | 06/09/2014 15:00 | Atlanta (ATL) | 06/09/2014 17:00 | Active | None |
| 12 | Sydney (SYD) | 09/09/2014 08:00 | Perth (PER) | 09/09/2014 13:00 | Active | None |
| 13 | Perth (PER) | 10/09/2014 10:00 | Sydney (SYD) | 10/09/2014 15:00 | Active | None |
| 14 | Atlanta (ATL) | 13/09/2014 07:00 | Nice (NCE) | 13/09/2014 16:00 | Active | None |
| 15 | Nice (NCE) | 18/09/2014 10:00 | New York (JFK) | 18/09/2014 18:00 | Active | 16 |
| 16 | New York (JFK) | 18/09/2014 18:10 | Atlanta (ATL) | 18/09/2014 21:00 | Active | 15 |

Again returning to Fig. 5, after removal of conflicts in block 258, block 260 forecasts a show rate based on past bookings for past flights (also referred to herein as a historical personal show probability), and block 262 determines a confidence factor associated with the forecasted show rate. The historical show rate in some embodiments may be determined based upon a comparison of redeemed (e.g., flown) and non-redeemed (e.g., canceled or no-show) bookings associated with bookings for past flights in the customer's booking history. In one embodiment, the determination of show rate or probability may first incorporate a determination of a travel purpose (e.g., business or leisure) and ticket conditions (e.g., refundable or exchangeable) of a customer's current booking as well as those of the other bookings in the customer's booking list, based upon an assumption that a customer may behave differently based upon whether the trip is for business or leisure, and whether the ticket is or is not exchangeable or refundable. In some embodiments, ticket conditions may be determined from incoming feeds, and travel purpose may be deduced using information in a booking such as the number of passengers in the booking, the presence of children, the booking class, the presence of a company code, etc. Based on these past bookings, a forecasted show rate or probability for the current booking and a confidence factor (which represents the confidence level of the forecast, which may be based at least in part on the amount of history available for the customer) may be determined.

Forecasting show probability based on past bookings for past flights may be performed in a number of different manner in different embodiments. For example, in one embodiment, an average may be computed based on past observations. From Table III above, for example, the customer has cancelled/been a no-show 2 times out of 7 (once past conflicts are removed), resulting in a show probability of 5/7 or about 71%. A confidence factor in such an embodiment may be based, for example, on the number of past observations, e.g.:

$$ConfidenceFactor = Min(100\%, NumberPastObservations/THRESHOLD),$$

where the threshold may be a parameter set by an airline. As an example, with a threshold of 20, a confidence factor for the above 71% computation is 7/20 or 35%.

Several variations of this methodology may also be implemented in other embodiments. For example, computations of show probability and/or confidence factor may be based only on past observations associated with the same travel purpose and/or ticket condition as the current booking. Other variations will be apparent to one of ordinary skill in the art having the benefit of the instant disclosure.

In other embodiments, various machine learning algorithms such as support vector machines or decision trees may be used. With a decision tree approach, for example, past observations may be clustered to determine which criteria are the most significant for each customer. Fig. 6, for example, illustrates an example decision tree 280 including decisions 282 and 284 determining respectively whether a current booking is a refundable or exchangeable ticket and whether a current booking is for a business travel purpose, along with resulting show probabilities and numbers of observations (usable for determining confidence factors) in blocks 286-290.

Returning again to Fig. 5, after determination of the show rate or probability in block 260 and confidence factor in block 262, block 264 may apply an impact of conflicts on the show rates of bookings for future flights. For example, if no conflict is detected with the current booking (i.e., the booking associated with the flight for which the show probability is being determined), the show probability and confidence factor may not be altered. This is the case when computing the show rate for flight 11 in the example of Table III in order to determine the best overbooking factor.

As another example, if a conflict is detected with a booking for a flown flight, since the customer has already flown on another flight in conflict, it is known that the customer will not be able to fly on the current booking. Therefore the forecasted show probability may be overridden and set to a show probability of 0%, with a confidence factor of 100%. This is the case when computing the show rate for flight 10 (in conflict with flight 9) in the example of Table III in order to determine the best overbooking factor.

As yet another example, if a conflict is detected with an active booking (i.e., a past booking for a future flight), the forecasted show probability may be divided by the number of other active bookings in conflict + 1. Thus, for example, in the example of Table III, when computing the show rate for flight 15 in order to determine the best overbooking factor, the forecasted show probability may be divided by two to account for the presence of one conflict. Likewise, if a flight were in conflict with two other active bookings, the forecasted show probability may be divided by three. In each case, however, the confidence factor may not be modified based upon the presence of conflicts.

With reference yet again to Fig. 5, upon completion of block 264, control returns to block 252 to process additional customers on the flight. It will be appreciated that for some customers, insufficient history may be available, so no personal show rate may be forecast for those customers. Then, once all customers are processed, block 252 passes control to block 266 to determine a statistical show rate forecast, e.g., using conventional techniques. For example, in one embodiment, observed show rates of past similar flights (e.g., same seasonality, same route, etc.) may be used, with prediction performed using a statistical method such as time series decomposition to determine a historical statistical show rate for the flight. In such an embodiment, all customers of a given flight (or a given booking class, e.g., if the forecast is performed at a class level) may be assigned the same statistical show rate or probability. In another embodiment, an individual historical statistical show rate may be forecast for each customer based on that customer's booking, e.g., by looking at past similar bookings (e.g., using clustering algorithms on PNR attributes, anonymously) and predicting with a statistical method if each customer is likely to depart on the flight.

Next, block 268 combines the statistical show rate forecast with the personal show rate forecast, e.g., using the confidence factor generated for the personal show rate forecast. For example, block 268 may retrieve a list of active bookings for the flight, and for each of these bookings, determine an overall show rate (ShowRate) for each booking as follows:

$$ShowRate = (1-f\%) \times StatisticalShowRate + (f\%) \times PersonalShowRate$$

where StatisticalShowRate is the show rate based on statistical show rate forecasting, PersonalShowRate is the show rate based on personal show rate forecasting, and f is the confidence factor. The overall show rate for the flight may be taken as an average of the show rates for the customers booked on the flight, e.g., as shown in Table IV below:

**Table IV: Determination of Flight Show Rate**

| Customer | Statistical Show Rate | Personal Show Rate | Confidence Factor | Show rate |
|---|---|---|---|---|
| A | 87% | 70% | 80% | 73.4% |
| B | 87% | No history | 0% | 87% |
| C | 87% | 10% | 20% | 71.6% |
| D | 87% | 50% | 20% | 79.6% |
| E | 87% | 100% | 90% | 98.7% |
| F | 87% | 100% | 20% | 89.6% |
| Overall | 87% | | | Avg.= 83.32% |

As noted above, show probability or show rate forecasts may be used in connection with availability determinations, e.g., for the purpose of revenue-driven inventory management and overbooking determinations. In addition, such forecasts may be used in other applications. For example, for flights that are not full, such forecasts may be used to optimize the amount of fuel on a plane, e.g., by transferring the forecasts to a flight management system to better match the amount of fuel on a plane to better match the actual number of customers expected to board the flight. Similarly, such forecasts may be used in catering applications, such that for flights that are not full, catering inventory (e.g., number of meals, drinks etc.) may be optimized for the expected number of customers on the flight.

Such show probability forecasts may also be used to optimize the handling of overbooked seats in an airport, e.g., at a gate or at a ticket counter. When handling a flight that is overbooked, check-in agents generally need to make sure that regardless of the number of customers who actually show up, the plane will not be overloaded, and such agents may employ different actions to reallocate customers. One way (voluntary transfer) is to ask customers whether they would accept to take a subsequent flight if the current one is full, in exchange for some compensation. Another way is to upgrade passengers to another cabin that is not full. Yet another way, which is often the most costly, is to deny boarding to some customers. All options have a cost, which is either paid in advance or in case a problem occurs.

As such, by forwarding such show probability forecasts to a check-in system, check-in agents may be provided with more accurate forecasts of the expected numbers of customers to board. Doing so may allow the agents to optimize the number of customers to whom they propose to be upgraded or to be pushed onto a subsequent flight. Doing so may result in savings over voluntary transfer compensations.

In summary, the methodologies described herein may be characterized by the following points:

1. A method of forecasting show probability for a service component, the method comprising:

maintaining, in a computerized database, data representing a booking history for a first customer booked for the service component;
accessing, with at least one processor, the data representing the booking history in the database;
determining, with at least one processor, a personal show probability for the first customer based upon the accessed data representing the booking history;
accessing, with at least one processor, anonymous statistical show probability data relevant to the service component; and
determining, with at least one processor, a show probability for the service component based on the determined personal show probability for the first customer and the accessed anonymous statistical show probability data.

2. The method of point 1, wherein the service component is for travel on a travel vehicle between an origin location and a destination location.

3. The method of point 1 of point 2, wherein the service component comprises a flight between an origin airport and a destination airport.

4. The method of any of points 1 to 3, wherein determining the personal show probability for the first customer based upon the accessed data representing the booking history includes:

identifying at least one non-redeemed booking for the first customer; and
determining the personal show probability for the first customer based at least in part on the identified at least one non-redeemed booking for the first customer.

5. The method of point 4, wherein the non-redeemed booking for the first customer comprises a canceled booking or a no-show booking for a past service component.

6. The method of point 4 or point 5, wherein the non-redeemed booking for the first customer comprises a conflicting booking that conflicts with another booking for the first customer.

7. The method of any of points 4 to 6, wherein determining the personal show probability for the first customer based at least in part upon the identified at least one non-redeemed booking includes comparing pairs of bookings in the booking history to identify conflicting bookings that are incapable of both being redeemed.

8. The method of point 7, wherein comparing the pairs of bookings in the booking history includes comparing first and second bookings, the first booking for travel between a first origin location and a first destination location, the second booking for travel between a second origin location and a second destination location, and wherein comparing the first and second bookings includes determining whether an arrival time of the first booking at the first destination location is compatible with a departure time of the second booking from the second origin location.

9. The method of point 7, wherein comparing the pairs of bookings in the booking history includes comparing first and second bookings, the first booking associated with a first time period and a first location, the second booking associated with a second time period and a second location, and wherein comparing the first and second bookings includes determining whether the first time period and the first location are compatible with the second time period and second location of the second booking such that the first and second bookings are both capable of being redeemed.

10. The method of point 9, further comprising determining a length of time to travel between the first and second locations, wherein determining whether the first time period and the first location are compatible with the second time period and second location of the second booking is based at least in part on the determined length of time.

11. The method of any of points 4 to 10, wherein determining the personal show probability for the first customer based at least in part upon the identified at least one non-redeemed booking further includes removing from further consideration at least one conflicting booking that is also a canceled or no-show booking.

12. The method of claim any of points 4 to 11, wherein determining the personal show probability for the first customer based at least in part upon the identified at least one non-redeemed booking further includes determining a historical personal show probability for the first customer based upon a comparison of redeemed and non-redeemed past bookings in the booking history for the first customer.

13. The method of point 12, wherein determining the personal show probability for the first customer based at least in part upon the identified at least one non-redeemed booking further includes modifying the historical personal show probability for the first customer in response to detecting a conflict between a current booking for the first customer that is associated with the service component and another booking in the booking history.

14. The method of point 13, wherein the other booking is a redeemed booking, and wherein modifying the historical personal show probability for the first customer includes setting the personal show probability for the first customer to indicate that the first customer will not redeem the service component.

15. The method of point 13, wherein the other booking is a future booking, and wherein modifying the historical personal show probability for the first customer includes dividing the historical personal show probability by a sum of the current booking and a number of other bookings in the booking history that conflict with the current booking.

16. The method of any of points 1 to 15, wherein determining the personal show probability for the first customer further includes determining a confidence factor for the personal show probability, and wherein determining the show probability for the service component includes:

    determining a statistical show probability for the first customer based at least in part upon the accessed anonymous statistical show probability data; and
    combining the statistical show probability for the first customer with the personal show probability for the first customer using the confidence factor.

17. The method of point 16, wherein the accessed anonymous statistical show probability data includes historical statistical show rates for similar service components, the method further comprising determining the statistical show probability for the first customer based at least in part upon the historical statistical show rates for similar service components.

18. The method of point 16 or point 17, wherein the accessed anonymous statistical show probability data includes historical statistical show rates for similar bookings, the method further comprising determining the statistical show probability for the first customer based at least in part upon the historical statistical show rates for similar bookings.

19. The method of any of points 1 to 18, wherein the computerized database stores identification data for each of a plurality of customers and booking history data representing booking histories for the plurality of customers, the method further comprising updating the computerized database in response to receipt of a new booking by:

applying a matching algorithm to the new booking to identify a customer among the plurality of customers with which the new booking is associated; and

associating the new booking with the identified customer in response to applying the matching algorithm.

20. The method of point 19, wherein applying the matching algorithm further comprises:

creating a new customer in the computerized database in response to a failure to identify a customer with which the new booking is associated; and

merging multiple customers in the computerized database in response to identifying that the new booking is associated with the multiple customers.

21. The method of point 19 or point 20, wherein applying the matching algorithm to the new booking includes comparing booking data associated with the new booking with the identification data for each of the plurality of customers, wherein the booking data includes two or more of a customer name, a customer phone number, a customer email address or a customer frequent flier number.

22. The method of any of points 1 to 21, further comprising overbooking the service component using the determined show probability.

23. The method of any of points 1 to 22, further comprising managing check-in of the service component using the determined show probability.

24. The method of any of claims points to 23, further comprising managing fuel or food allocation for the service component using the determined show probability.

25. An apparatus arranged to forecast a show probability for a service component by executing any of the methods of points 1 to 24.

26. A computer program being configured upon execution by at least one processor to forecast a show probability for a service component by performing any of the methods of points 1 to 24.

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

**Claims**

1.   A method of forecasting show probability for a service component, the method comprising:

maintaining, in a computerized database, data representing a booking history for a first customer booked for the service component;

accessing, with at least one processor, the data representing the booking history in the database;

determining, with at least one processor, a personal show probability for the first customer based upon the accessed data representing the booking history;

accessing, with at least one processor, anonymous statistical show probability data relevant to the service component; and

determining, with at least one processor, a show probability for the service component based on the determined personal show probability for the first customer and the accessed anonymous statistical show probability data.

2.   The method of claim 1, wherein determining the personal show probability for the first customer based upon the accessed data representing the booking history includes:

identifying at least one non-redeemed booking for the first customer; and

determining the personal show probability for the first customer based at least in part on the identified at least one non-redeemed booking for the first customer.

3.   The method of claim 2, wherein the non-redeemed booking for the first customer comprises a canceled booking or a no-show booking for a past service component and/or a conflicting booking that conflicts with another booking for the first customer.

4. The method of claim 2 or claim 3, wherein determining the personal show probability for the first customer based at least in part upon the identified at least one non-redeemed booking includes comparing pairs of bookings in the booking history to identify conflicting bookings that are incapable of both being redeemed.

5. The method of claim 4, wherein comparing the pairs of bookings in the booking history includes comparing first and second bookings, the first booking for travel between a first origin location and a first destination location, the second booking for travel between a second origin location and a second destination location, and wherein comparing the first and second bookings includes determining whether an arrival time of the first booking at the first destination location is compatible with a departure time of the second booking from the second origin location.

6. The method of claim 4, wherein comparing the pairs of bookings in the booking history includes comparing first and second bookings, the first booking associated with a first time period and a first location, the second booking associated with a second time period and a second location, and wherein comparing the first and second bookings includes determining whether the first time period and the first location are compatible with the second time period and second location of the second booking such that the first and second bookings are both capable of being redeemed.

7. The method of claim 6, further comprising determining a length of time to travel between the first and second locations, wherein determining whether the first time period and the first location are compatible with the second time period and second location of the second booking is based at least in part on the determined length of time.

8. The method of any of claims 2 to 7, wherein determining the personal show probability for the first customer based at least in part upon the identified at least one non-redeemed booking further includes removing from further consideration at least one conflicting booking that is also a canceled or no-show booking.

9. The method of claim any of claim 2 to 8, wherein determining the personal show probability for the first customer based at least in part upon the identified at least one non-redeemed booking further includes determining a historical personal show probability for the first customer based upon a comparison of redeemed and non-redeemed past bookings in the booking history for the first customer.

10. The method of claim 9, wherein determining the personal show probability for the first customer based at least in part upon the identified at least one non-redeemed booking further includes modifying the historical personal show probability for the first customer in response to detecting a conflict between a current booking for the first customer that is associated with the service component and another booking in the booking history.

11. The method of claim 10, wherein the other booking is a redeemed booking, and wherein modifying the historical personal show probability for the first customer includes setting the personal show probability for the first customer to indicate that the first customer will not redeem the service component.

12. The method of claim 10, wherein the other booking is a future booking, and wherein modifying the historical personal show probability for the first customer includes dividing the historical personal show probability by a sum of the current booking and a number of other bookings in the booking history that conflict with the current booking.

13. The method of any of claims 1 to 12, wherein determining the personal show probability for the first customer further includes determining a confidence factor for the personal show probability, and wherein determining the show probability for the service component includes:

determining a statistical show probability for the first customer based at least in part upon the accessed anonymous statistical show probability data; and
combining the statistical show probability for the first customer with the personal show probability for the first customer using the confidence factor.

14. An apparatus, comprising:

at least one processor; and

program code configured upon execution by the at least one processor to forecast show probability for a service component by:

maintaining, in a computerized database, data representing a booking history for a first customer booked for the service component;
accessing, with at least one processor, the data representing the booking history in the database;
determining, with at least one processor, a personal show probability for the first customer based upon the accessed data representing the booking history;
accessing, with at least one processor, anonymous statistical show probability data relevant to the service component; and
determining, with at least one processor, a show probability for the service component based on the determined personal show probability for the first customer and the accessed anonymous statistical show probability data.

**15.** A computer program product, comprising:

a non-transitory computer readable medium; and
program code stored on the non-transitory computer readable medium and configured upon execution by at least one processor to forecast show probability for a service component by:

maintaining, in a computerized database, data representing a booking history for a first customer booked for the service component;
accessing, with at least one processor, the data representing the booking history in the database;
determining, with at least one processor, a personal show probability for the first customer based upon the accessed data representing the booking history;
accessing, with at least one processor, anonymous statistical show probability data relevant to the service component; and
determining, with at least one processor, a show probability for the service component based on the determined personal show probability for the first customer and the accessed anonymous statistical show probability data.

CUSTOMER
MANAGEMENT SYSTEM

RESERVATION 102
SYSTEM

104
INVENTORY SYSTEM

REVENUE        106
MANAGEMENT
SYSTEM

SHOW RATE 118
FORECASTING
MODULE

DEPARTURE    108
CONTROL SYSTEM

CEM/LOYALTY 110
SYSTEM

100

112
TRAVEL
RESERVATION
DEVICE

116
NETWORK

114
TRAVEL
PROVIDER
DEVICE

**FIG. 1**

REVENUE MANAGEMENT SYSTEM 106

162        MEMORY

SHOW RATE FORECASTING MODULE

STATISTICAL SHOW RATE
FORECASTING MODULE

PERSONAL SHOW RATE
FORECASTING MODULE

OS              170

118

172

174

PROCESSOR            160

USER I/F    164    NETWORK I/F    168

176        MASS STORAGE        166

STATISTICAL      CUST. HISTORY
REPOSITORY       REPOSITORY

178

**FIG. 2**

FIG. 3

230 PROCESS FEED

232 FOR EACH BOOKING — DONE → DONE

NEXT

234 APPLY MATCHING ALGORITHM TO IDENTIFY CUSTOMER

**FIG. 4**

242 CREATE NEW CUSTOMER RECORD ← NO — 236 CUSTOMER FOUND?

YES

238 MULTIPLE CUSTOMERS FOUND? — YES → 244 MERGE CUSTOMER RECORDS

NO

240 ADD BOOKING TO CUSTOMER RECORD

280

282 IS TICKET REFUNDABLE OR EXCHANGEABLE?

**FIG. 6**

284 YES → IS IT A BUSINESS TRAVEL PURPOSE?

NO → 290 100% SHOW PROBABILITY 8 OBSERVATIONS

YES → 286 33% SHOW PROBABILITY 6 OBSERVATIONS

NO → 288 90% SHOW PROBABILITY 10 OBSERVATIONS

250

SHOW RATE FORECAST

**FIG. 5**

252

FOR EACH
CUSTOMER
ON FLIGHT

DONE

NEXT

254

FETCH PAST BOOKINGS FOR PAST AND
FUTURE FLIGHTS FOR CUSTOMER

256

DETERMINE CONFLICTING BOOKINGS

258

REMOVE INFLUENCE OF CONFLICTS ON
PAST BOOKINGS FOR FLOWN FLIGHTS

260

FORECAST SHOW RATE BASED ON PAST
BOOKINGS FOR PAST FLIGHTS

262

DETERMINE CONFIDENCE FACTOR

264

APPLY IMPACT OF CONFLICTS ON SHOW
RATES OF BOOKINGS FOR FUTURE FLIGHTS

266

DETERMINE STATISTICAL SHOW RATE
FORECAST

268

COMBINE PERSONAL AND STATISTICAL
SHOW RATE FORECASTS

DONE

Europäisches
Patentamt

European
Patent Office

Office européen
des brevets

# EUROPEAN SEARCH REPORT

Application Number

EP 14 00 4280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wikipedia: "Computer reservations system", INTERNET ARTICLE, 2 December 2014 (2014-12-02), XP055174413, Retrieved from the Internet: URL:http://en.wikipedia.org/w/index.php?title=Computer_reservations_system&oldid=636243218 [retrieved on 2015-03-06] * the whole document * | 1-15 | INV. G06Q10/02 G06Q50/14 |
| A | Elzbieta Malinowski ET AL: "Advanced Data Warehouse Design: From Conventional to Spatial and Temporal Applications", 6 April 2011 (2011-04-06), Springer, XP055174414, ISBN: 978-3-54-074404-7 pages 55-58, * page 55 - page 58 * | 1-15 | |

----- 

-----

TECHNICAL FIELDS
SEARCHED      (IPC)

G06Q

The present search report has been drawn up for all claims

| Place of search | Date of completion of the search | Examiner |
|---|---|---|
| Munich | 6 March 2015 | Krafft, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)